# EUROPÄISCHE PATENTANMELDUNG

(11) **EP 1 460 287 A1**
(43) Veröffentlichungstag der Anmeldung: **22.09.2004**
(21) Anmeldenummer: 03029997.8
(22) Anmeldetag: 31.12.2003
(51) Int. Cl.: F16C 3/03, F16F 15/34

(54) **Wuchtmittel für eine Gelenkwelle**

(30) Priorität: 18.03.2003 DE 10312056
(71) Anmelder: Spicer Gelenkwellenbau GmbH & Co. KG, 45143 Essen (DE)
(72) Erfinder: Schultze, Hans-Jürgen, 46240 Bottrop (DE)
(74) Vertreter: Harwardt, Günther, Dipl.-Ing.

(57) **Zusammenfassung**

Die Erfindung betrifft Wuchtmittel zur Anbringung an einer bezüglich einer Rotationsachse 4 zylindrischen Außenfläche 9, 11 einer Welle oder eines Rohres einer Gelenkwelle als Träger 7, 10, welche mindestens ein Wuchtgewicht 12 umfassen, das aus einem Metall oder einer Metalllegierung besteht, das eine Innenfläche 13, die Teil einer auf der Rotationsachse 4 zentrierten zylindrischen Fläche ist, aufweist, das entlang der Rotationsachse 4 beabstandete Endflächen 15, 16 aufweist, bei dem mindestens eine der Endflächen 15, 16 mit Mitteln 17, 18 zur Verbindung mit einem weiteren gegengleichen Wuchtgewicht 12 versehen ist, und das unter Vermittlung einer auf der Innenfläche 13 befindlichen oder aufbringbaren Klebeschicht 19 mit der Außenfläche 9, 11 des Trägers 7, 11 vollflächig verbindbar ist.

## Beschreibung

Die Erfindung betrifft Wuchtmittel zur Anbringung an einer bezüglich einer Rotationsachse zylindrischen Außenfläche einer Welle oder eines Rohres einer Gelenkwelle als Träger welche mindestens ein Wuchtgewicht umfassen, das aus einem Metall oder einer Metalllegierung besteht.

Die DE 39 06 117 C1 betrifft Wuchtmittel zur Anbringung an einer bezüglich einer Rotationsachse zylindrischen Außenfläche einer Welle oder eines Rohres einer Kreuzgelenkwelle als Träger, welche mindestens ein Wuchtgewicht umfassen. Zu diesen Wuchtmitteln gehört auch ein Klebeband, das das bzw. die Wuchtgewichte mit mindestens einer Wicklung um den Träger umschließt und festlegt. Bevorzugt sind jedoch mehrere Wicklungen vorgesehen. Vorzugsweise ist ferner dabei das Klebeband entgegen der Hauptdrehrichtung um die Welle mit mehreren Wicklungen über das Wuchtgewicht gewickelt. Problematisch dabei ist, dass dem Lieferanten in vielen Anwendungsfällen nicht bekannt ist, wie die Hauptdrehrichtung festgelegt ist. Dabei besteht die Gefahr, dass sich das Klebeband löst.

Die DE 44 40 812 C2 beschreibt eine Vorrichtung zum Ankleben von Wuchtgewichten an Wellen, insbesondere Kardanwellen und Gelenkwellen für Kraftfahrzeuge, bestehend aus einer Wuchtmaschine, in der die zu wuchtende Welle eingespannt wird und mindestens einer Einrichtung zum Ankleben der Wuchtgewichte an der Welle. Die Wuchtgewichte werden in Form eines aufgewickelten Bandes bereitgestellt, welches entsprechend dem beim Wuchten ermittelten Massenausgleich von dem Band abgelängt wird. Die in Bandform vorgesehenen Wuchtgewichte sind mit einer Klebeschicht versehen, die durch eine Schutzfolie abgedeckt ist. Vor dem Abtrennen wird die Schutzfolie abgezogen. Mit Hilfe einer Formschale und darauf befindlicher Gummimatte wird das Wuchtgewicht an die Welle angepresst. Da die Formschale die Form eines Prismas hat, kann keine vollflächige Anlage erzielt werden. Eine solche Einrichtung ist jedoch nur im Großserienprozess wegen der mit der Einrichtung verbundenen Kosten einsetzbar.

In der DE 201 19 769 U1 ist ein Wuchtgewichtstrang zum Auswuchten von Fahrzeugrädern beschrieben, welcher ein Trägerband umfasst, auf welchem hintereinander Wuchtgewichte in Form von rechteckigen Metallplatten angebracht sind. Das Trägerband ist beidseitig mit einem Kleber versehen, wobei die Seite, auf der die Wuchtgewichte nicht angebracht sind, zunächst mit einer Schutzfolie versehen ist. Die Wuchtgewichte sind auf dem Trägerband mit einem geringen Abstand voneinander angeordnet, so dass sich die insgesamt auszugleichende Masse aus der Summe einzelner Wuchtgewichte, die durch den abgetrennten Trägerbandabschnitt verbunden sind, ergibt. Um bei einer aus einzelnen Gewichten aufgebauten Masse eine gute Anpassbarkeit an gekrümmte Flächen zu erlauben, müssen die Gewichte möglichst in Richtung der Erstreckung des Gliederbandes klein dimensioniert sein. Diese Ausbildung und die daraus resultierende Anordnung erlauben jedoch keine Konzentration der Wuchtgewichte an der Stelle, die für den Ausgleich einer Unwucht besonders günstig ist. Aufgrund der Anordnung ist nämlich praktisch eine Anordnung auf einer Linie parallel zur Rotationsachse des auszuwuchtenden Bauteiles nicht möglich.

Der Erfindung liegt die Aufgabe zugrunde, Wuchtmittel vorzuschlagen, die einfach zu befestigen und zu kombinieren sind und konzentriert dort befestigbar sind, wo die Unwucht am günstigsten auszugleichen ist.

Diese Aufgabe wird erfindungsgemäß dadurch gelöst, dass das mindestens eine Wuchtgewicht eine Innenfläche, die Teil einer auf der Rotationsachse zentrierten zylindrischen Fläche ist, aufweist, entlang der Rotationsachse beabstandete Endflächen aufweist und das unter Vermittlung einer auf der Innenfläche befindlichen oder aufbringbaren Klebeschicht mit der Außenfläche des Trägers vollflächig verbindbar ist, wobei mindestens eine der Endflächen des mindestens einen Wuchtgewichts mit Mitteln zur Verbindung mit einem weiteren gegengleichen Wuchtgewicht versehen ist.

Von Vorteil bei dieser Ausbildung ist, dass die auszugleichende Masse selektiv aus Wuchtgewichten gleicher oder unterschiedlicher Massen aufgebaut werden kann, die sich eng der Außenfläche des Trägers anschmiegen und parallel zur Rotationsachse konzentriert an diesem anbringbar sind. Hierdurch wird mit geringstmöglicher Masse eine hohe Wuchtqualität erreicht. Für die Verbindung kann ein hochfester Dauerkleber verwendet werden, der auch hohen Fliehkräften dauerhaft standhält. Erst nach Feststellung der genauen Wuchtgewichtsgröße wird die Klebeschutzfolie abgezogen und das Wuchtgewicht aufgebracht. Da eine sich eine vollflächige Auflage an der Außenfläche des Trägers ergibt, ist eine geschlossene Anbindung erzielt, so dass ein Unterrosten oder daraus resultierend ein Lösen verhindert sind.

Ein weiterer Vorteil ist darin begründet, dass das Wuchtgewicht auch beispielsweise an einer aus Kunststoff hergestellten Dichthülse eines Längenausgleichs einer Kreuzgelenkwelle angeordnet werden kann. Da kein Unterrosten bei Wellen bzw. Rohren aus Stahl eintreten kann, ergibt sich auch eine insgesamt sicherere Verbindung. Eine Anbringung der Wuchtgewichte ist ohne besondere und aufwendige Hilfsmittel möglich.

Um bei größeren Unwuchten das Wuchtgewicht genauestens anpassen zu können, ist es möglich, mehrere unterschiedlich große Gewichte zu kombinieren, wobei eine erste Ausgestaltung vorsieht, dass zur Verbindung mehrerer Wuchtgewichte jeweils eine Endfläche der Wuchtgewichte mit einer Klebeschicht versehen ist.

Alternativ ist es möglich, dass eine Endfläche des Wuchtgewichtes mindestens einen Zapfen trägt und die weitere Endfläche mindestens eine Bohrung aufweist, die einen dem Zapfen angepassten Querschnitt besitzt, und
dass sich die Bohrung und der Zapfen parallel zur Rotationsachse erstrecken. Mehrere Wuchtgewichte können zur Bildung der Ausgleichsmasse zusammengesteckt werden.

Ein bevorzugtes Ausführungsbeispiel der Erfindung ist in der Zeichnung schematisch dargestellt.

Es zeigt
- Figur 1: einen Halblängsschnitt einer Kreuzgelenkwelle mit daran angebrachten Wuchtgewichten,
- Figur 2: eine Seitenansicht einer ersten Ausführungsform eines Wuchtgewichtes,
- Figur 3: eine Ansicht in Pfeilrichtung X von Figur 2,
- Figur 4: zwei miteinander zu kombinierende Wuchtgewichte in perspektivischer Darstellung vor dem Verbinden und
- Figur 5: die beiden Wuchtgewichte gemäß Figur 4 im verbundenen Zustand.

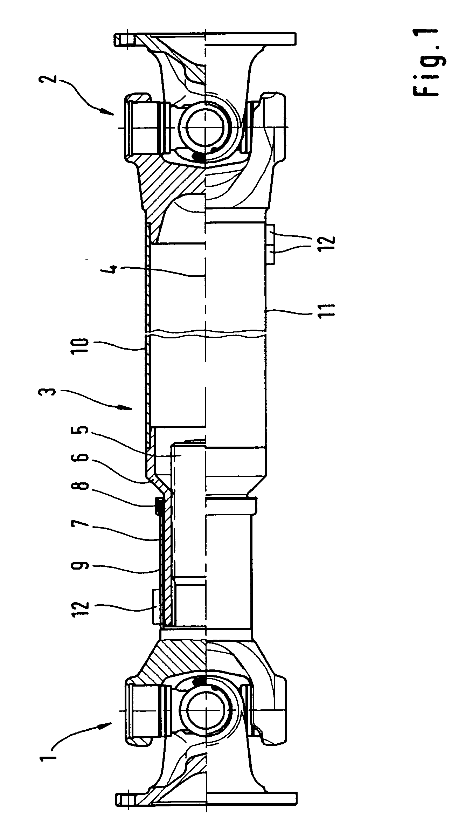

Figur 1 zeigt eine Kreuzgelenkwelle mit einem ersten Kreuzgelenk 1, einem zweiten Kreuzgelenk 2 und dem beide verbindenden Längenausgleich 3. Diese Bauteile sind auf der Rotationsachse 3 zentriert dargestellt, d.h. die beiden Kreuzgelenke 1, 2 sind in der gestreckten Lage dargestellt. Die beiden Kreuzgelenke 1, 2 weisen jeweils eine Gelenkgabel mit einem Anschlussflansch zur Verbindung mit einem treibenden bzw. anzutreibenden Teil einer Maschine oder eines Fahrzeugs auf. Die andere, mit der ersten Gelenkgabel über ein Zapfenkreuz verbundene zweite Gelenkgabel, ist bezüglich des ersten Kreuzgelenkes 1 mit einem Profilzapfen 5 verbunden, der auf seiner Außenfläche mit einer Keilverzahnung versehen ist, deren Zähne parallel zur Rotationsachse 4 verlaufen. Auf diesem Profilzapfen 5 ist eine mit einem diesen entsprechenden Innenprofil versehende Profilhülse 6 entlang der Rotationsachse 4 verschiebbar angeordnet. Die Profilhülse 6 ist wiederum über ein Verbindungsrohr 10, das die Außenfläche 11 aufweist, mit der zweiten Gelenkgabel des zweiten Kreuzgelenkes 2 verbunden. Zur Abdichtung des Längenausgleichs 3 nach außen ist der Gelenkgabel des ersten Kreuzgelenkes 1, die den Profilzapfen 5 trägt, eine Dichthülse 7 zugeordnet. Die Dichthülse 7 ist mit der zugehörigen Gelenkgabel fest und dicht verbunden. Sie trägt an ihrem freien Ende einen Dichtring 8, der zur Außenfläche der Profilhülse 6 abdichtet. Der Dichtring 8 gleitet bei Längenänderungen der Kreuzgelenkwelle auf der Außenfläche der Profilhülse 6. Die Dichthülse 7 weist die Außenfläche 9 auf. Die Dichthülse 7 kann aus einem Metall, beispielsweise Stahl, oder Kunststoff bestehen, da sie an der Drehmomentübertragung nicht beteiligt ist. Die Drehmomentübertragung erfolgt zwischen den beiden Kreuzgelenken 1, 2 über den Längenausgleich 3. Für mit höheren Drehzahlen rotierende Kreuzgelenkwellen ist eine bestimmte Wuchtqualität je nach Anwendungsfall einzuhalten. Hierzu werden Kreuzgelenkwellen auf einer Wuchtmaschine ausgewuchtet. Zum Unwuchtausgleich werden Wuchtgewichte 12 angebracht.

Beim vorliegenden Beispiel gemäß Figur 1 ist ein Wuchtgewicht 12 an der Außenfläche 9 der Dichthülse 7 zugeordnet. Zwei Wuchtgewichte 12 sind auf der Außenfläche 11 des Verbindungsrohres 10 angebracht. Die Verbindung zwischen der Außenfläche 9 der Dichthülse und dem Wuchtgewicht 12 sowie der Außenfläche 11 des Verbindungsrohres 10 und den Wuchtgewichten 12 erfolgt durch eine Klebeschicht. Die Wuchtgewichte 12 erstrecken sich auf der Außenfläche 9 bzw. 11 über einen begrenzten Winkelbereich um die Rotationsachse 4. Wenn, wie bei dem Verbindungsrohr 10 vorgesehen, mehrere Wuchtgewichte 12 zu wählen waren, sind diese parallel zur Rotationsachse 4 hintereinander angeordnet.

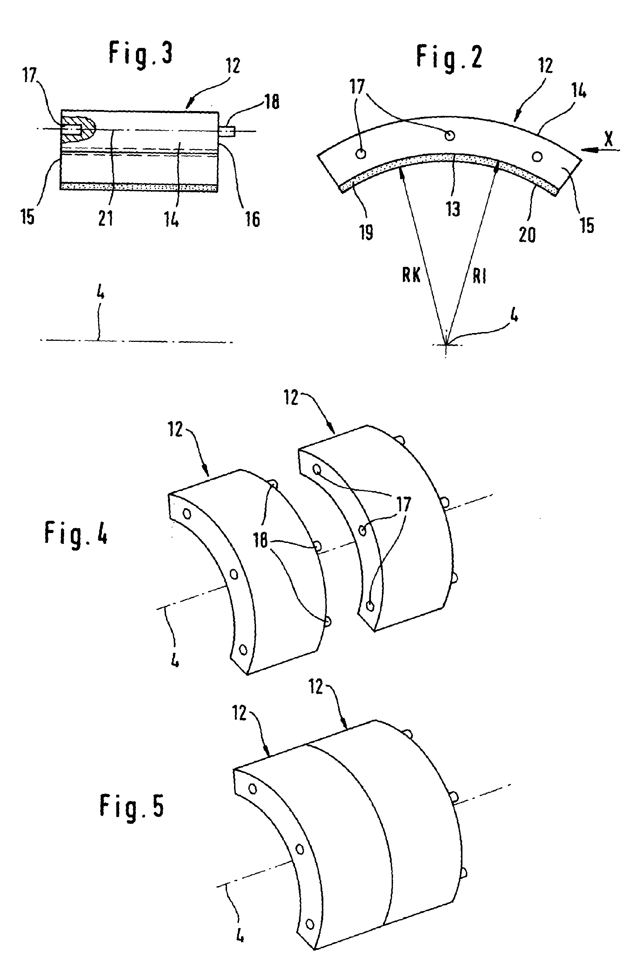

Ein Ausführungsbeispiel eines Wuchtgewichtes ist in den Figuren 2 und 3 dargestellt und wird nachfolgend anhand derselben näher erläutert. Das Wuchtgewicht 12 besteht aus einem Metall oder einer Metalllegierung und weist eine Innenfläche 13 auf, die konkav gestaltet ist, und zwar einen Teil einer Mantelfläche eines Zylinders darstellt, dessen Achse auf einer Achse zentriert ist, die der Rotationsachse 4 entspricht. Die Krümmung des Wuchtgewichtes 12 ist also der der Außenfläche, an der es angebracht werden soll, unter Berücksichtung der dazwischen angeordneten Klebeschicht 19 mit dem Radius RI entsprechend gestaltet. Das Wuchtgewicht 12 weist ferner die gewölbte Außenfläche 14 und die erste Endfläche 15 sowie die zweite Endfläche 16 auf. Die beiden Endflächen 15, 16 sind entlang der Rotationsachse 4 voneinander beabstandet. Die erste Endfläche 15 besitzt drei Bohrungen 17, die im Bogen um die Rotationsachse 4 verteilt angeordnet sind und jeweils auf einer zur Rotationsachse 4 parallelen Achse 21 verlaufen.

Von der zweiten Endfläche 16 stehen entsprechend den Bohrungen 17 verteilt drei Zapfen 18 vor, die auf den gleichen Achsen 21 angeordnet sind wie die Bohrungen 17. Die mit der zugehörigen Außenfläche des Längenausgleichs 3 der Kreuzgelenkwelle in Kontakt tretende Klebefläche 20 weist den Radius RK auf und bildet ebenfalls einen Teil einer zylindrischen Mantelfläche. Die Klebefläche 20 ist hinsichtlich des Radius RK an den der zugehörigen Außenfläche (9 oder 11) angepasst, so dass nach Verkleben mit dieser eine spaltfreie Verbindung gegeben ist. Die Klebeschicht 13 wird vorzugsweise unmittelbar auf die Wuchtgewichte 12 aufgebracht und durch eine Folie abgedeckt und wird erst dann, wenn das Wuchtgewicht mit der Kreuzgelenkwelle verbunden werden soll, entfernt. Um verschiedene Massen bereitzustellen, können Wuchtgewichte 12 mit unterschiedlicher Stärke dargestellt sein, wobei jedoch sichergestellt wird, dass die Zapfen 18 und Bohrungen 17 aller sich auch durch ihre Stärke unterscheidenden Wuchtgewichte 12 mit dem gleichen Abstand zur Innenfläche 20 angeordnet sind, d.h. sie sind auf dem gleichen Radius im Verhältnis zur Rotationsachse 4 und mit gleichem Umfangsabstand auf demselben angeordnet, so dass, wie aus den Figuren 4 und 5 ersichtlich, zwei, wenn auch in der Dicke und in der Länge unterschiedliche Wuchtgewichte parallel der Rotationsachse 4 hintereinanderliegend miteinander verbunden werden können. In Figur 4 sind die beiden Wuchtgewichte 12 unverbunden miteinander dargestellt. In Figur 5 sind sie miteinander verbunden dargestellt. Im verbundenen Zustand greifen die Zapfen 18 in die Bohrungen 17 ein. Anstelle oder zusätzlich zu der Verbindung über die Zapfen 18 und die Bohrungen 17 kann eine Klebeschicht an einer der zueinander in Anlage kommenden Endflächen zweier Wuchtgewichte 12 vorgesehen sein.

### Bezugszeichenliste

- 1: erstes Kreuzgelenk
- 2: zweites Kreuzgelenk
- 3: Längenausgleich
- 4: Rotationsachse
- 5: Profilzapfen
- 6: Profilhülse
- 7: Dichthülse
- 8: Dichtring
- 9: Außenfläche der Dichthülse
- 10: Verbindungsrohr
- 11: Außenfläche des Verbindungsrohrs
- 12: Wuchtgewicht
- 13: Innenfläche
- 14: Außenfläche
- 15: erste Endfläche
- 16: zweite Endfläche
- 17: Bohrung
- 18: Zapfen
- 19: Klebeschicht
- 20: Klebefläche
- 21: Achse

- RI: Radius der Innenfläche
- RK: Radius der Klebefläche

## Patentansprüche

1. Wuchtmittel zur Anbringung an einer bezüglich einer Rotationsachse (4) zylindrischen Außenfläche (9, 11) einer Welle oder eines Rohres einer Gelenkwelle als Träger (7, 10), welche mindestens ein Wuchtgewicht (12) umfassen, das aus einem Metall oder einer Metalllegierung besteht,
**dadurch gekennzeichnet,**
**dass** das mindestens eine Wuchtgewicht (12) eine Innenfläche (13), die Teil einer auf der Rotationsachse (4) zentrierten zylindrischen Fläche ist, aufweist, entlang der Rotationsachse (4) beabstandete Endflächen (15, 16) aufweist und das unter Vermittlung einer auf der Innenfläche (13) befindlichen oder aufbringbaren Klebeschicht (19) mit der Außenfläche (9, 11) des Trägers (7, 11) vollflächig verbindbar ist, wobei mindestens eine der Endflächen (15, 16) des mindestens einen Wuchtgewichts (12) mit Mitteln (17, 18) zur Verbindung mit einem weiteren gegengleichen Wuchtgewicht (12) versehen ist.

2. Wuchtmittel nach Anspruch 1,
**dadurch gekennzeichnet,**
**dass** zur Verbindung mehrerer Wuchtgewichte (12) jeweils eine Endfläche (15, 16) der Wuchtgewichte (12) mit einer Klebeschicht versehen ist.

3. Wuchtmittel nach Anspruch 1,
**dadurch gekennzeichnet,**
**dass** eine Endfläche (16) des Wuchtgewichtes (12) mindestens einen Zapfen (18) trägt und die weitere Endfläche (15) mindestens eine Bohrung (17) aufweist, die einen dem Zapfen (18) angepassten Querschnitt besitzt, und
**dass** sich die Bohrung (17) und der Zapfen (18) parallel zur Rotationsachse (4) erstrecken.
